## Europäisches Patentamt

## European Patent Office

## Office européen des brevets

(19)

(11) Veröffentlichungsnummer: **0 182 773**
**A2**

(12) # EUROPÄISCHE PATENTANMELDUNG

(21) Anmeldenummer: **85890078.0**

(51) Int. Cl.⁴: **B 62 D 29/00**

(22) Anmeldetag: **26.03.85**

(30) Priorität: **13.11.84 AT 3591/84**

(71) Anmelder: **Kromag AG für Werkzeug- und Metallindustrie, Leobersdorferstrasse 20-24, A-2552 Hirtenberg NÖ (AT)**

(43) Veröffentlichungstag der Anmeldung: **28.05.86 Patentblatt 86/22**

(72) Erfinder: **Hamal, Herbert, Breitenauergasse 9, A-2700 Wr. Neustadt (AT)**

(84) Benannte Vertragsstaaten: **BE CH DE FR GB IT LI LU NL SE**

(74) Vertreter: **Rippel, Andreas, Dipl.-Ing., Maxingstrasse 34, A-1130 Wien (AT)**

(54) **Ladeplattform für Lastfahrzeuge.**

(57) Eine Ladeplattform für Lastfahrzeuge besitzt ein Gerippe 1, 2 aus Holz, dessen Hohlräume mit einem Isoliermaterial 3 gefüllt sind. Das Gerippe 1, 2 ist samt dem Isoliermaterial 3 mit einer Schicht 17 aus glasfaserverstärktem Kunststoff umhüllt. Im Bereich der Angriffspunkte 13, 14 der Hub- bzw. Schwenkorgane 8, 9 und 10 sind Metallverstärkungen 6 eingesetzt.

Durch die Kombination von Holz, Kunststoffen und Metall wird eine wesentliche Geräuschminderung beim Betätigen der Ladeplattform sowie eine enorme Steigerung der Isolierfähigkeit erreicht.

EP 0 182 773 A2

ACTORUM AG

- 1 -

## Ladeplattform für Lastfahrzeuge

Die Erfindung bezieht sich auf eine Ladeplattform für Lastfahrzeuge, die insbesondere mittels eines Lenkerparallelogrammes in die Höhe der Ladefläche des Fahrzeuges hebbar und von dieser zum Boden senkbar sowie zur Bildung einer Bordwand schwenkbar ist.

Derartige Ladeplattformen bilden z.B. einen hinteren oder seitlichen Teil der Bordwand von Lastkraftwagen oder ähnlichen Fahrzeugen und gestatten es, die Be- und Entladung solcher Fahrzeuge besonders einfach zu gestalten. Bekannte Ladeplattformen sind aus Stahl bzw. zur Gewichtsverminderung auch aus Leichtmetall gefertigt. Es hat sich gezeigt, daß beim Betätigen solcher Ladeplattformen ein unverhältnismässig hohes Geräusch insbesondere beim Schließen der Bordwand auftritt. Ein weiterer Nachteil der bekannten metallischen Ladeplattformen ist, daß sie ein sehr hohes Wärmeleitvermögen besitzen und dadurch eine Wärme-bzw. Kälteisolierung des Laderaumes durch die Ladeplattform selbst nicht möglich ist. Bei gewünschter Isolierung müssen vielmehr gesonderte Türen aus isolierendem Material vorgesehen werden.

- 2 -

0182773

Die Erfindung hat es sich zum Ziel gesetzt, diese Nachteile der bekannten Ladeplattformen zu vermeiden und erreicht dies bei einer Ladeplattform der eingangs genannten Art dadurch, daß die Ladeplattform ein Gerippe aus Holz aufweist, dessen Hohlräume mit Isoliermaterial, insbesondere Polyurethan gefüllt sind und das samt dem Isoliermaterial mit einer Schicht aus Glasfaser verstärktem Kunststoff umhüllt ist, wobei insbesondere im Bereich der Angriffspunkte der Hub- bzw. Schwenkorgane Metallverstärkungen eingesetzt sind. Praktische Versuche haben gezeigt, daß durch die erfindungsgemässe Kombination von Holz, Kunststoffen und Metall bei Festigkeiten und Gewichten ähnlich den Ladeplattformen aus Leichtmetall eine wesentliche Geräuschminderung beim Betätigen sowie eine enorme Steigerung der Isolierfähigkeit erreicht wird.

Um eine gute Verbindung der einzelnen Komponenten der Ladeplattform zu erreichen, sind erfindungsgemäß das Gerippe aus Holz sowie die Metallverstärkungen einlaminiert. Dies bedeutet, daß die Holzprofile sowie die Metallverstärkungen bei der Herstellung der Ladeplattform mit Glasfasergewebe umwickelt werden und dieses Gewebe anschließend mit Kunststoff getränkt wird.

Nach einem weiteren vorteilhaften Merkmal der Erfindung sind die Angriffspunkte der Hub- bzw. Schwenkorgane an einem wannenförmigen Körper angeordnet, der mit einem Flansch versehen ist, mittels dem er mit einlaminierten Metallverstärkungen verschraubt ist. Dadurch wird eine einfache Verbindung bei guter Einleitung der Kräfte in die Ladeplattform erreicht.

Um das Ende der Ladeplattform zur Erleichterung der Be- bzw. Entladung in bekannter Weise spitz zulaufen lassen zu können, ist erfindungsgemäß an die den Hub- bzw. Schwenkorganen abgelegene Seite der Ladeplattform eine spitz zulaufende metallische Leiste angesetzt, die mit einlaminierten Metallverstärkungen verschraubt ist.

Zur Erhöhung der Zugfestigkeit im oberen Bereich der Ladeplattform sind ferner vorteilhaft in diesem oberen Bereich bandförmige Kohlenfasergewebe eingebettet.

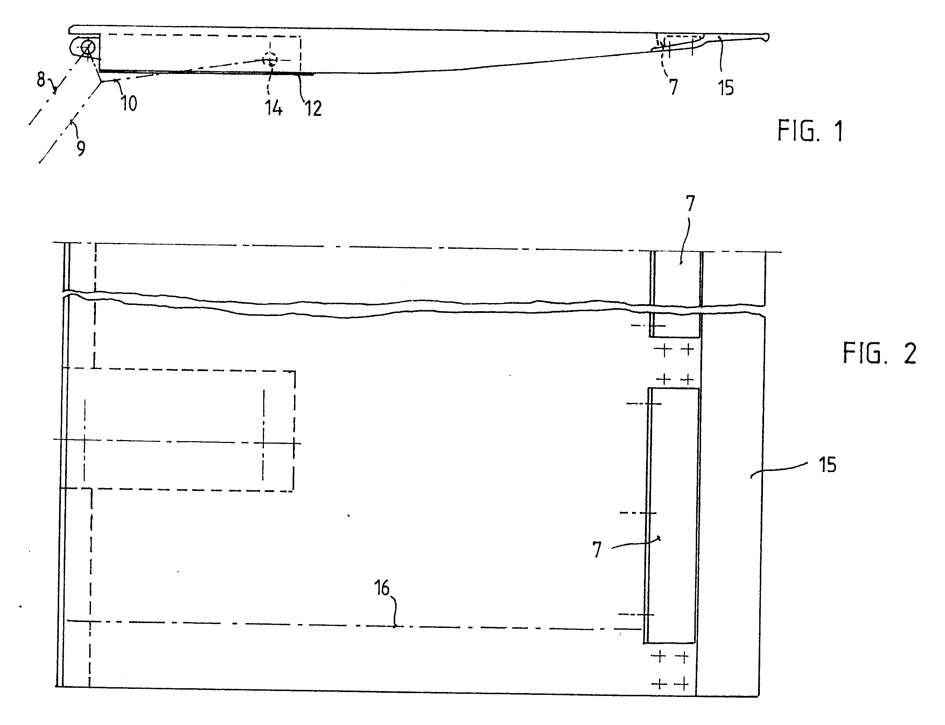

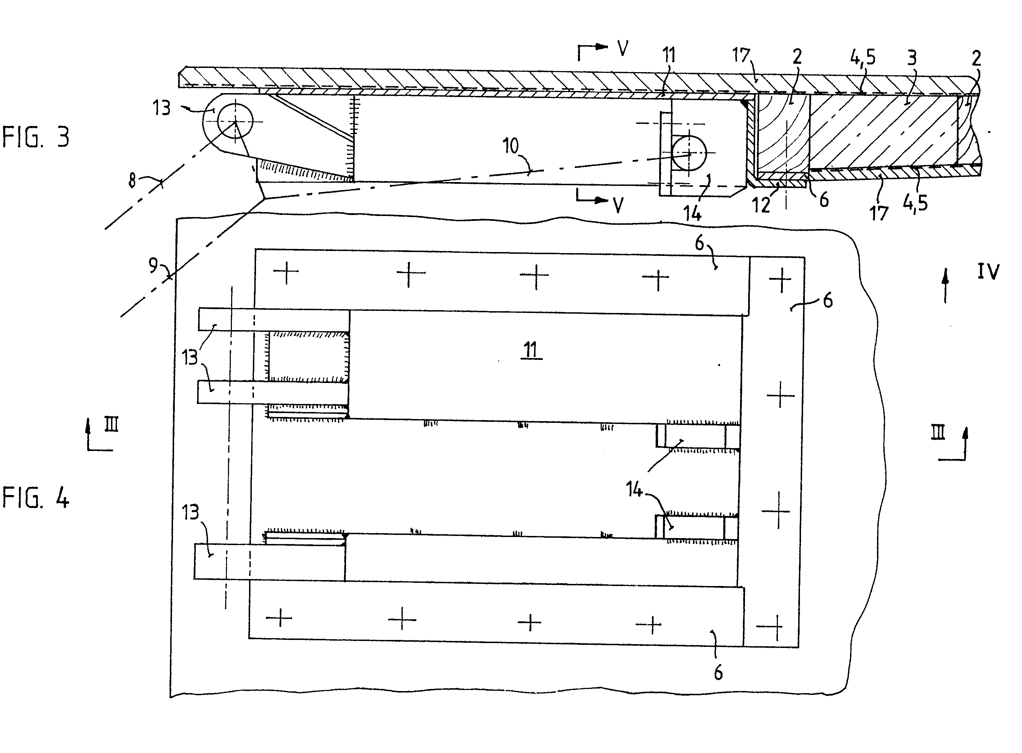

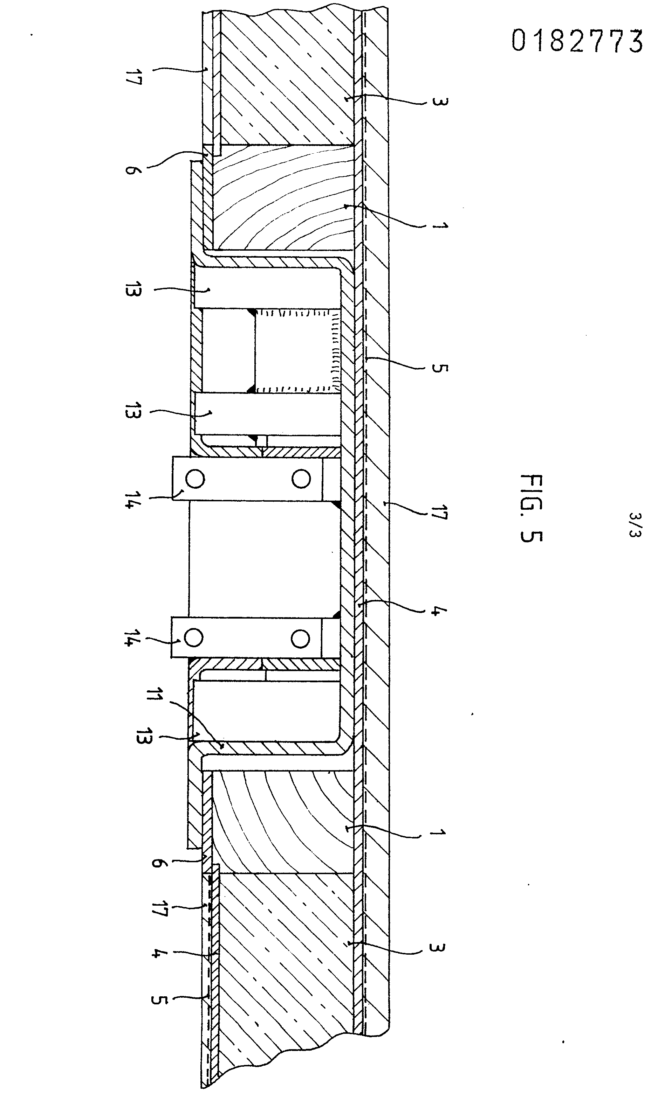

Nachstehend ist die Erfindung anhand eines in den Zeichnungen dargestellten Ausführungsbeispieles näher erläutert. Dabei zeigen: Fig. 1 eine Seitenansicht einer Ladeplattform, Fig. 2 die Draufsicht, Fig. 3 einen Längsschnitt entlang der Linie III-III in Fig.4 im Bereich der Angriffspunkte der Hub- bzw. Schwenkorgane, Fig. 4 eine Ansicht in Richtung des Pfeiles IV in Fig. 3 und Fig. 5 in vergrößertem Maßstab einen Schnitt entlang der Linie V-V in Fig. 3.

Gemäß den Zeichnungen weist die Ladeplattform ein Gerippe aus Längshölzern 1 und Querhölzern 2 auf, wobei die Hohlräume zwischen den einzelnen Hölzern 1, 2 mit Polyurethan-Schaumstoffkörpern 3 gefüllt sind. Darüber bzw. darunter befinden sich Sperrholzplatten 4, über welche Glasfasermatten 5 gelegt sind. Die Hölzer 1, 2 sowie Metallverstärkungen 6, 7 sind mit Glasfasermatten umhüllt, die jedoch aus zeichnerischen Gründen nicht dargestellt sind.

In Fig. 3 ist durch die entsprechenden Mittellinien angedeutet, daß an der Ladeplattform Parallelogrammlenker 8, 9 als Huborgane und Zylinder 10 als Schwenkorgane angreifen. Um die durch diese Organe aufgebrachten Kräfte in die Ladeplattform einzuleiten, ist an jeder Seite der Ladeplattform je ein wannenförmiger Körper 11 vorgesehen, der mittels eines auf drei Seiten umlaufenden Flansches 12 mit den Metallverstärkungen 6 verschraubt ist. Mit dem wannenförmigen Körper 11 sind Laschen 13 als Angriffspunkte für die Huborgane 8, 9 und Laschen 14 als Angriffsorgane für die Huborgane 10 verschweißt.

An der gegenüber liegenden Seite der Ladebordwand ist mit den Metallverstärkungen 7 ein spitz zulaufendes Profil 15 aus Leichtmetall verschraubt.

Im oberen Bereich der Ladeplattform verlaufen der Länge nach bandförmige Kohlefasergewebe 16 (Fig.2).

0182773

Bei der Herstellung einer erfindungsgemässen Ladeplattform wird vorerst das Gerippe aus Holz gefertigt, die Hölzer 1, 2 des Gerippes sowie die ebenfalls angebrachten Metallverstärkungen 6, 7 mit Glasfasergewebe umhüllt, sowie in die Hohlräume des Gerippes die Schaumstoffkörper 3 eingelegt. Nunmehr werden die Sperrholzplatten 4 sowie das Glasfasergewebe 5 aufgebracht. Der so gefertigte Rohkörper wird in eine Form eingebracht und in dieser Form ein Unterdruck erzeugt. Zufolge dieses Unterdruckes kann Kunststoff, insbesondere Epoxydharz in die Form eindringen, die Glasfasermatten 5 sowie die die Hölzer 1, 2 und die Metallverstärkungen 6, 7 umhüllenden Glasfasermatten werden durch den Kunststoff gedrängt und es wird die umhüllende Schicht 17 aus Kunststoff gebildet. Dabei werden auch die vorher eingelegten bandförmigen Kohlefasergewebe 16 eingebettet.

Nach dem Entfernen aus der Form kann der wannenförmige Körper 11 mit der Ladebordwand bzw. den Metallverstärkungen 6 verschraubt werden und die Ladebordwand ist fertig zur Montage am vorgesehenen Lastfahrzeug.

Im Rahmen der Erfindung sind zahlreiche Abänderungen möglich. Insbesondere werden sich durch andere als die angedeuteten Hub-und Schwenkorgane andere Verhältnisse bei der Einleitung der Kräfte in die Ladebordwand ergeben, wodurch sich jedoch der grundsätzliche Aufbau der Ladebordwand aus Glasfaser verstärktem Kunststoff, Holz und Metall nicht ändert.

Wien, 1985 03 20

KROMAG AG. für Werkzeug-
und Metallindustrie
durch:

Patentansprüche

1. Ladeplattform für Lastfahrzeuge, die insbesondere mittels eines Lenkerparallelogrammes in die Höhe der Ladefläche des Fahrzeuges hebbar und von dieser zum Boden absenkbar sowie zur Bildung einer Bordwand schwenkbar ist, dadurch gekennzeichnet, daß die Ladeplattform ein Gerippe (1, 2) aus Holz aufweist, dessen Hohlräume mit Isoliermaterial (3), insbesondere Polyurethan gefüllt sind und das samt dem Isoliermaterial (3) mit einer Schicht (17) aus glasfaserverstärktem Kunststoff umhüllt ist, wobei insbesondere im Bereich der Angriffspunkte (13, 14) der Hub-bzw. Schwenkorgane (8, 9, 10) Metallverstärkungen (6) eingesetzt sind.

2. Ladeplattform nach Anspruch 1, dadurch gekennzeichnet, daß das Gerippe (1, 2) aus Holz sowie die Metallverstärkungen (6) einlaminiert sind.

3. Ladeplattform nach den Ansprüchen 1 und 2, dadurch gekennzeichnet, daß die Angriffspunkte (13, 14) der Hub-bzw. Schwenkorgane (8, 9, 10) an einem wannenförmigen Körper (11) angeordnet sind, der mit einem Flansch (12) versehen ist, mittels dem er mit einlaminierten Metallverstärkungen (6) verschraubt ist.

4. Ladeplattform nach einem der Ansprüche 1 bis 3, dadurch gekennzeichnet, daß an die den Hub-bzw. Schwenkorganen (8, 9,10) abgelegenen Seite der Ladeplattform eine spitz zulaufende metallische Leiste (15) angesetzt ist, die mit einlaminierten Metallverstärkungen (7) verschraubt ist.

5. Ladeplattform nach einem der Ansprüche 1 bis 4, dadurch gekennzeichnet, daß in deren oberem Bereich bandförmige Kohlefasergewebe (16) eingebettet sind.

Kromag AG. für Werkzeug-und
Metallindustrie
durch:

FIG. 1

FIG. 2

0182773

2/3

FIG. 3

FIG. 4

0182773

3/3

# FIG. 5